# EUROPÄISCHE PATENTSCHRIFT

(11) **EP 1 852 215 B1**
(45) Veröffentlichungstag und Bekanntmachung des Hinweises auf die Patenterteilung: **13.05.2009**
(21) Anmeldenummer: 07104462.2
(22) Anmeldetag: 20.03.2007
(51) Int. Cl.: B23Q 11/00

(54) **Einrichtung zur Aufnahme und Transport von mit Späne verunreinigtem Kühlschmiermittel**
Device for picking up and transporting cooling lubricant contaminated with chippings
Dispositif de saisie et de transport de lubrifiant contaminé avec des copeaux

(30) Priorität: 03.05.2006 DE 202006007164 U
(43) Veröffentlichungstag der Anmeldung: 07.11.2007
(73) Patentinhaber: MANN+HUMMEL GmbH, 71638 Ludwigsburg (DE)
(72) Erfinder: Reynders, Luc, 3770 Riemst (BE); Kempeneers, Jan, 3730 Hoeselt (BE)

(56) Entgegenhaltungen:
- EP-A- 1 270 093
- US-A- 5 980 735
- US-A1- 2004 047 700

## Beschreibung

### Technisches Gebiet

Die Erfindung betrifft eine Einrichtung zur Aufnahme und Transport von mit Späne verunreinigtem Kühlschmiermittel nach dem Oberbegriff des unabhängigen Anspruchs 1.

### Stand der Technik

Aus der US 5 980 735 ist eine Einrichtung zum Sammeln von Kühlflüssigkeit und Späne bekannt. Diese Einrichtung dient zum Transportieren der beschriebenen Bestandteile von mehreren Werkzeugmaschinen aus zu einem Filtersystem, in welchem das Kühlschmiermittel gereinigt und wiederum den Werkzeugmaschinen zugeführt wird. Üblicherweise verlaufen unter mehreren Werkzeugmaschinen Rinnen, in denen sich das verunreinigte Kühlschmiermittel sammelt. Diese Rinnen weisen ein Gefälle auf, so dass das Kühlschmiermittel in Richtung Filtersystem fließen kann. Bei solchen Rinnen besteht allerdings die Gefahr, sofern das Gefälle nicht besonders groß ist, dass die Späne diese Rinnen verstopfen und es deshalb zu einem Flüssigkeitsstau kommt.

Zur Vermeidung des Staus wird gemäß dem Stand der Technik vorgeschlagen, oberhalb der Rinne mehrere Sprühdüsen anzuordnen, die mit Kühlschmiermittel beaufschlagt sind und die eventuelle Späneansammlungen wegspülen bzw. auch das Kühlschmiermittel in der Rinne beschleunigen und für einen zügigen Abtransport sorgen. Ein Nachteil der bekannten Vorrichtung besteht darin, dass die Düsen oberhalb des maximalen Flüssigkeitspegels angeordnet sein müssen, damit diese selbst nicht den Flüssigkeits- bzw. Spänestrom behindern. Dies führt dazu, dass der Sprühstrahl nur oberflächlich auf die Flüssigkeit auftrifft und die Gefahr besteht, dass insbesondere bei sehr schweren Späne oder auch bei Schleifschlamm, welcher transportiert werden muss, ein Wegspülen der Bestandteile nicht gewährleistet ist.

### Offenbarung der Erfindung

Der Erfindung liegt die Aufgabe zugrunde, die genannten Nachteile zu vermeiden und eine Einrichtung zu schaffen, welche zuverlässig das Kühlschmiermittel und die darin enthaltenen Späne oder Verunreinigungen zu einer Filtereinrichtung oder Umpumpstation spülen.

Diese Aufgabe wird durch den Anspruch 1 und dessen kennzeichnenden Merkmale gelöst.

Der wesentliche Vorteil der Erfindung liegt darin, dass am Boden der Rinne Öffnungen vorgesehen sind und durch diese Öffnungen Flüssigkeit, d. h. Kühlschmiermittel, geleitet werden kann, wobei die Öffnungen derart angeordnet sind, dass sie in Richtung des Flüssigkeitstransports, d. h. zu der Filtereinrichtung oder Umpumpstation hin, die Flüssigkeit und die darin enthaltenen Verunreinigungen beschleunigen. Gemäß einer Ausgestaltung der Erfindung sind diese Öffnungen mit einem oder mehreren Düsenköpfen versehen und der Düsenkopf bzw. die Düsenköpfe in der Rinne verschraubt oder verschweißt.

Zweckmäßigerweise sind die Düsenköpfe sehr flach ausgebildet und weisen eine Auflaufschräge für den Flüssigkeitsstrom auf, so dass diese möglichst wenig den Flüssigkeitsstrom behindern.

Es ist gemäß einer weiteren Ausgestaltung der Erfindung vorgesehen, mehrere Düsenköpfe längs der Rinne anzuordnen, zweckmäßigerweise werden diese dort angeordnet, wo ein erhöhter Schmutzeintrag erfolgt oder Gefahr besteht, dass in diesem Bereich der Rinne sich der Flüssigkeitsstrom verlangsamt oder ins Stocken gerät.

Weiterbildungsgemäß ist im Bereich der Rinne oder oberhalb der Rinne ein Geschwindigkeitssensor zur Ermittlung der Geschwindigkeit der Flüssigkeit in der Rinne vorgesehen. In Abhängigkeit von dieser Geschwindigkeit kann eine Steuerung der durch den Düsenkopf strömenden Flüssigkeit erfolgen. Die Fließgeschwindigkeit der Flüssigkeit liegt zweckmäßigerweise im Bereich von 0,1 bis 1 m pro Sekunde.

Gemäß einer weiteren Ausgestaltung besteht die Rinne aus mehreren zusammengesetzten Teilstücken. Diese einzelnen Teilstücke sind über Flanschverbindungen miteinander verbunden, und im Bereich der Flanschverbindung ist ein Dichtring vorgesehen.

In einer weiteren Ausgestaltung der Erfindung sind die Düsenköpfe derart angeordnet, dass die Fließgeschwindigkeit in Richtung zu der Filtereinrichtung oder Umpumpstation hin abnehmend verläuft. Der erste Düsenkopf am Eintritt des Kühlschmiermittels von der ersten Werkzeugmaschine am Beginn der Rinne muss gewährleisten, dass die der Rinne zugeführte Flüssigkeit die größtmögliche Geschwindigkeit annimmt. Ein wesentlicher weiterer Vorteil der Erfindung liegt noch darin, dass durch die in die Flüssigkeit eingebetteten Öffnungen eine Schaumbildung in der Rinne vermieden wird.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Die Erfindung wird nachfolgend anhand eines Ausführungsbeispiels näher erläutert. Es zeigen:
- Fig. 1: die schematische Darstellung einer Einrichtung mit mehreren Werkzeugmaschinen und einer Rinne zum Abtransport von verunreinigtem Kühlschmiermittel,
- Fig. 2: die Detailansicht eines Düsenkopfes in einem Längsschnitt,
- Fig. 3: den in Fig. 2 gezeigten Düsenkopf in einem Längsschnitt und
- Fig. 4: eine perspektivische Darstellung einer Rinne mit mehreren darin angeordneten Düsenköpfen.

### Ausführungsform(en) der Erfindung

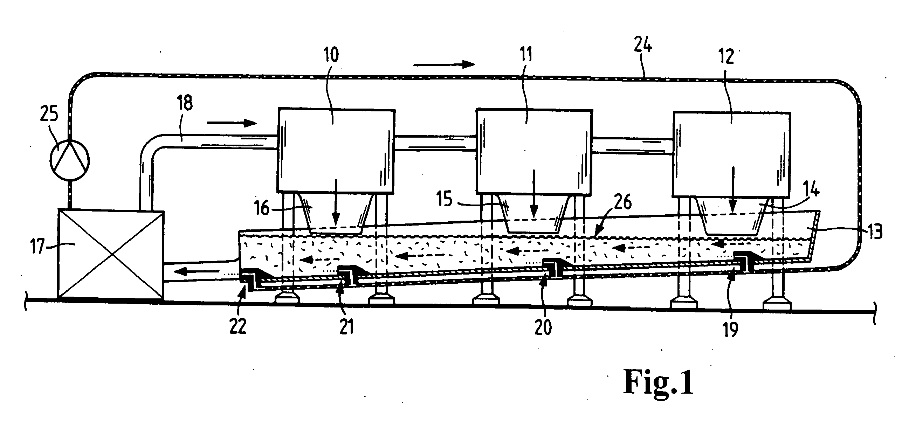

In Figur 1 sind drei Werkzeugmaschinen 10,11, 12 schematisch dargestellt. Unterhalb dieser Werkzeugmaschinen verläuft eine Einrichtung zur Aufnahme und zum Transport von mit Späne verunreinigtem Kühlschmiermittel, auch als Rinne 13 bezeichnet. In dieser Rinne wird über geeignete trichterförmige Einrichtungen 14, 15, 16 das ablaufende Kühlschmiermittel und die produzierten Späne zugeführt. Die Werkzeugmaschinen werden ausgehend von einer Filtereinrichtung 17 über die Flüssigkeitsleitung 18 mit gereinigtem Kühlschmiermittel versorgt. In der Rinne 13 sind Düsenköpfe 19, 20, 21 und 22 vorgesehen, diese befinden sich am Boden der Rinne 13. Die Düsenköpfe werden ebenfalls mit Flüssigkeit versorgt, die aus der Filtereinrichtung 17 entnommen wird und über die Leitung 24 strömt. Die Düsenköpfe befinden sich unterhalb des Flüssigkeitspegels und werden über eine Pumpe 25 mit einem bestimmten Flüssigkeitsdruck beaufschlagt. Die Düsen weisen eine Orientierung in Richtung der Filtereinrichtung auf und sorgen dafür, dass die Flüssigkeit 26, die sich in der Rinne 13 befindet, zu der Filtereinrichtung strömt. Wie ersichtlich ist die Rinne zur Filtereinrichtung geneigt angeordnet. Üblicherweise ist die Neigung jedoch sehr gering gehalten, damit eine Vielzahl von Werkzeugmaschinen an eine solche Rinne angeschlossen werden können und die Rinne bei der letzten Werkzeugmaschine nicht eine zu große Höhe aufweist.

Der Vorteil der Düsenköpfe liegt darin, dass nahezu kein Gefälle in der Rinne benötigt wird und trotzdem gewährleistet ist, dass durch die ausströmende Flüssigkeit aus den Düsenköpfen die Strömungsgeschwindigkeit der Flüssigkeit 26 so hoch ist, dass das darin enthaltende Material wie Späne oder Schlamm zuverlässig mitgeführt wird.

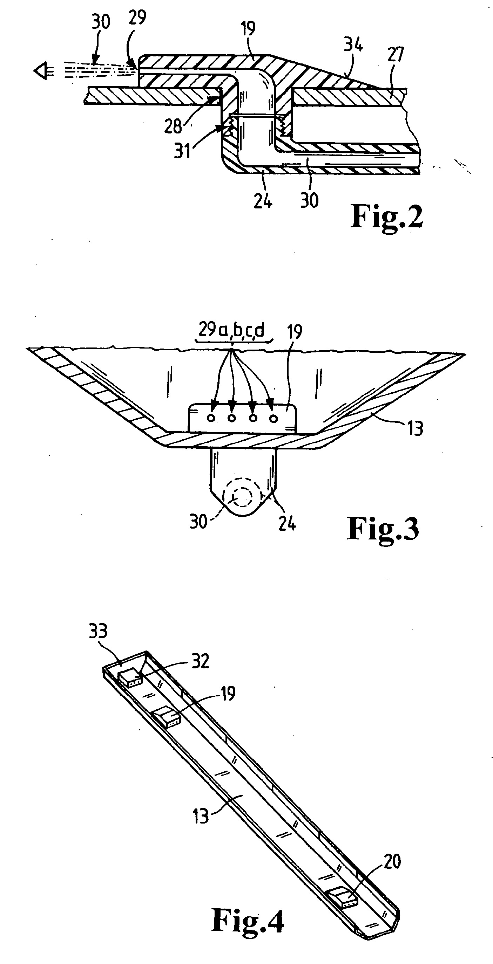

Figur 2 zeigt einen Düsekopf 19 in einem längs der Rinne verlaufenden Schnitt. Der Rinnenboden 27 weist eine Öffnung 28 auf, oberhalb dieser Öffnung 28 ist der Düsenkopf angeordnet. Dieser besitzt eine Düsenöffnung 29, aus welcher die zugeführte Flüssigkeit 30 ausströmt. Der Düsenkopf 19 weist einen sich durch die Öffnung 28 erstreckenden Anschluss 31 auf und ist mit der Leitung 24 verbunden. Der Düsenkopf besitzt eine Abschrägung, die ein einfacheres Überströmen des Düsenkopfes durch die verunreinigte Flüssigkeit ermöglicht. Auch können sich am Düsenkopf keine Schmutz- oder Späneanlagerungen bilden.

Figur 3 zeigt den Düsenkopf 19 aus der Richtung der Düsenöffnungen 29 a bis d. Es ist zweckmäßig, die Düsenköpfe längs der Rinne mit einer unterschiedlichen Anzahl von Düsenöffnungen auszustatten. Selbstverständlich besteht auch die Möglichkeit, den Durchmesser der Düsenöffnungen zu variieren, um eine optimale Strömung in der Rinne zu erzielen.

Figur 4 zeigt in einer perspektivischen Darstellung die Rinne 13, in der ein Düsenkopf 19 und ein Düsenkopf 20 zu sehen sind. Am Beginn der Rinne kann ein einzelner Düsenkopf 32 in der Stirnwand 33 vorgesehen sein.

## Patentansprüche

1. Einrichtung zur Aufnahme und Transport von mit Späne verunreinigtem Kühlschmiermittel, bestehend aus einer wannenförmigen Rinne (13), welche insbesondere unterhalb von Werkzeugmaschinen (10 - 12) und/oder zwischen Werkzeugmaschinen (10 - 12) und einer Filtereinrichtung (17) oder Umpumpstation angeordnet ist, **dadurch gekennzeichnet, dass** im unteren Bereich der Rinne (13) wenigstens eine Öffnung (28) und oberhalb dieser Öffnung (28) wenigstens ein Flüssigkeitsaustritt (29) vorgesehen ist, welcher derart gestaltet ist, dass eine durch diese Öffnung (28) und den Flüssigkeitsaustritt (29) strömende Flüssigkeit, insbesondere Kühlschmiermittel, eine Beschleunigung des Transports des in der Rinne (13) befindlichen flüssigen oder festen Stoffesentlang dem Boden der Rinse bewirkt.

2. Einrichtung nach Anspruch 1, **dadurch gekennzeichnet, dass** an der im unteren Bereich vorgesehenen Öffnung (28) ein Düsenkopf (19) vorgesehen ist, welcher mit der Rinne (13) verschraubt oder verschweißt ist und dieser Düsenkopf (19) mehrere Flüssigkeitsaustrittsöffnungen ausweist.

3. Einrichtung nach Anspruch 1 oder 2, **dadurch gekennzeichnet, dass** die Rinne (13) längs ihrer Erstreckung mehrere im Abstand angeordnete Flüssigkeitsaustrittsöffnungen (29a - d)oder Düsenköpfe (19 - 22) aufweist.

4. Einrichtung nach einem der vorherigen Ansprüche, **dadurch gekennzeichnet, dass** im Bereich der Rinne (13) wenigstens ein Geschwindigkeitssensor zur Ermittlung der Geschwindigkeit in der Rinne (13) vorgesehen ist und eine Steuerung der durch den Düsenkopf (19 - 22) strömenden Flüssigkeit in Abhängigkeit von der Geschwindigkeit erfolgt.

5. Einrichtung nach einem der vorherigen Ansprüche, **dadurch gekennzeichnet, dass** die Fließgeschwindigkeit im Bereich 0,1 - 1m pro Sekunde liegt.

6. Einrichtung nach einem der vorherigen Ansprüche, **dadurch gekennzeichnet, dass** die Rinne (13) aus mehreren zusammengesetzten Teilstücken besteht, wobei die einzelnen Teilstücke über eine Flanschverbindung miteinander verbunden sind und die Abdichtung über wenigstens einen axial wirkenden Abdichtring erfolgt.

7. Einrichtung nach Anspruch 2, **dadurch gekennzeichnet, dass** jeder Düsenkopf (19 - 22) entlang der Rinne (13) über eine an der erforderlichen Fließgeschwindigkeit versehenen Anzahl von Einzeldüsen (29a - d) verfügt und wobei die Fließgeschwindigkeit am geodätisch oberen Bereich der Rinne (13) größer als am unteren Bereich der Rinne (13) ist.

## Claims

1. Device for picking up and transporting cooling lubricant contaminated with chippings consisting of a tub-shaped channel (13) which is in particular located underneath machine tools (10-12) and /or between machine tools (10-12) and a filtering device (17) or repumping station, **characterized in that** in the lower area of the channel (13) at least one opening (28) and above this opening (28) at least one liquid outlet (29) are provided for which is shaped in such a way that a liquid flowing through this opening (28) and the liquid outlet (29), in particular cooling lubricant, causes an acceleration of the transport of the liquid or solid material inside the channel (13) along the bottom of the channel.

2. Device according to claim 1, **characterized in that** at the opening (28) provided in the lower area a nozzle head (19) is provided for which is screwed or welded to the channel (13) and that this nozzle head (19) features several liquid outlet openings.

3. Device according to claim 1 or 2, **characterized in that** the channel (13) along its extension features several spaced liquid outlet openings (29a - d) or nozzle heads (19-22).

4. Device according to one of the above claims, **characterized in that** in the area of the channel (13) at least one speed sensor for detecting the speed in the channel (13) is provided for and that the liquid flowing through the nozzle head (19 - 22) is speed-compensated.

5. Device according to one of the above claims, **characterized in that** the flow velocity ranges between 0.1 - 1 m per second.

6. Device according to one of the above claims, **characterized in that** the channel (13) consists of several assembled segments, the segments being connected with each other via a flange joint and the sealing being realized via at least one axially acting sealing ring.

7. Device according to claim 2, **characterized in that** each nozzle head (19 - 22) along the channel (13) is provided with a certain number of individual nozzles (29a - d) depending on the required flow velocity, and the flow velocity being faster at the geodetically upper area of the channel (13) than at the lower area of the channel (13).

## Revendications

1. Dispositif de réception et de transport d'un lubrifiant réfrigérant sali par de la limaille, composé d'une goulotte en forme de bac (13) disposée en particulier en dessous de machines-outils (10 - 12) et / ou entre des machines-outils (10 - 12) et un dispositif de filtrage (17) ou une station de transvasement par pompage, **caractérisé en ce que** dans la partie inférieure de la goulotte (13), au moins une ouverture (28) est prévue et, au-dessus de cette ouverture (28), au moins un écoulement de liquide (29) est prévu, qui est réalisé de telle manière qu'un liquide coulant par cette ouverture (28) et par l'écoulement de liquide (29), notamment un lubrifiant réfrigérant, ait pour effet d'accélérer le transport du matériau liquide ou solide se trouvant dans la goulotte (13) le long du fond de la goulotte.

2. Dispositif selon la revendication 1, **caractérisé en ce qu'**au niveau de l'ouverture (28) prévue dans la partie inférieure, une tête de buse (19) étant vissée ou soudée à la goulotte (13) est prévue et que cette tête de buse (19) présente plusieurs ouvertures d'écoulement de liquide.

3. Dispositif selon la revendication 1 ou 2, **caractérisé en ce que** la goulotte (13) présente le long de son étendue plusieurs ouvertures d'écoulement de liquide (29 a-d) ou têtes de buses (19 - 22) disposées à une certaine distance.

4. Dispositif selon l'une des revendications précédentes, **caractérisé en ce que** dans la zone de la goulotte (13), au moins un capteur de vitesse permettant de mesurer la vitesse dans la goulotte (13) est prévu et que le liquide coulant à travers la tête de buse (19 - 22) est commandé en fonction de la vitesse.

5. Dispositif selon l'une des revendications précédentes, **caractérisé en ce que** la vitesse d'écoulement est de l'ordre de 0,1 à 1 m par seconde.

6. Dispositif selon l'une des revendications précédentes, **caractérisé en ce que** la goulotte (13) se compose de plusieurs éléments partiels assemblés, les éléments partiels individuels étant reliés les uns aux autres par un accouplement à brides et l'étanchement étant assuré par au moins une bague d'étanchéité à effet axial.

7. Dispositif selon la revendication 2, **caractérisé en ce que** chaque tête de buse (19 - 22) dispose le long de la goulotte (13) d'un nombre de buses individuelles (29 a-d) adapté à la vitesse d'écoulement nécessaire et la vitesse d'écoulement étant plus élevée dans la partie géodésiquement supérieure de la goulotte (13) que dans la partie inférieure de la goulotte (13).
